# EUROPÄISCHE PATENTSCHRIFT

(11) **EP 3 579 498 B1**
(45) Veröffentlichungstag und Bekanntmachung des Hinweises auf die Patenterteilung: **26.07.2023**
(21) Anmeldenummer: 18176265.9
(22) Anmeldetag: 06.06.2018
(51) Int. Cl.: H04L 12/28, H04L 41/0806, H04L 41/0816, H04L 41/0895, H04L 41/40

(54) **VERFAHREN ZUM KONFIGURIEREN EINES KOMMUNIKATIONSNETZES**
METHOD FOR CONFIGURING A COMMUNICATION NETWORK
PROCEDE DE CONFIGURATION D'UN RESEAU DE COMMUNICATION

(43) Veröffentlichungstag der Anmeldung: 11.12.2019
(73) Patentinhaber: Siemens Aktiengesellschaft, 80333 München (DE)
(72) Erfinder: Kintzler, Florian, 1140 Wien (AT)
(74) Vertreter: Siemens Patent Attorneys

(56) Entgegenhaltungen:
- EP-A1- 3 185 476
- WO-A1-2017/186938
- US-A1- 2018 109 533

## Beschreibung

### Technisches Gebiet

Die gegenständliche Erfindung betrifft ein Verfahren zum Konfigurieren eines Kommunikationsnetzes. Dieses Kommunikationsnetz besteht aus einer Mehrzahl an Netzknoten (z.B. Geräteeinheiten, Router, etc.) sowie zumindest aus einer zentralen Kontrolleinheit. Vom Kommunikationsnetz wird eine Kommunikationsstruktur zur Verfügung gestellt, über welche von den Netzknoten entsprechend der jeweiligen Funktionalitäten und der jeweils genutzten Dienste bzw. Anwendungen kommuniziert wird.

### Stand der Technik

Ein Kommunikationsnetz ist üblicherweise eine Infrastruktur für eine Übermittlung von Informationen und/oder Daten beispielsweise in Form von Datenpaketen zwischen verschiedenen Netzknoten und bietet damit eine Kommunikationsstruktur, über welche von Netzknoten entsprechende der genutzten Anwendungen kommunizieren werden kann. Derartige Netzknoten können beispielsweise je nach Einsatzbereich des Kommunikationsnetzes (z.B. als Rechnernetz, im Industrie- und/oder Energiemanagementbereich, in der Gebäudetechnik, etc.) unterschiedliche Endgeräteeinheiten wie z.B. Rechnereinheiten, IP-Endgeräte, Messeinheiten, Sensoren, Steuer- und/oder Regeleinheit, Aktoren, Feldgeräte, etc. sein.

Zur physikalischen und logischen Umsetzung der Kommunikationsstruktur sind neben entsprechenden Verbindungen (z.B. Kabel, Glasfaser, Verbinder, drahtlose Kommunikationsverbindungen, etc.) auch vermittelnde Komponenten wie z.B. Router, Switche, Access Points, etc. als Netzknoten erforderlich, von welchen beispielsweise den unterschiedlichen Endgeräteeinheiten Zugang zum Kommunikationsnetz ermöglicht wird und/oder Informationen bzw. Daten innerhalb des Kommunikationsnetzes weitergeleitet werden. Derartige Netzknoten können in manchen Fällen z.B. auch als virtuelle bzw. Softwarelösung und nicht als physikalische Hardwarelösung realisiert sein.

Ein Kommunikationsnetz umfasst damit alle Ressourcen wie z.B. vermittelnde Komponenten und Endgeräteeinheiten als Netzknoten und Verbindungen, um eine Kommunikationsstruktur für einen Datenaustausch z.B. mittels Datenpakete zwischen voneinander entfernten Zugangspunkten bzw. Endgeräteeinheiten zu ermöglichen. Diese Kommunikationsstruktur des Kommunikationsnetzes wird von Diensten bzw. Anwendungen für den Datenaustausch genutzt. Unter Dienst bzw. Anwendung wird in der Informationstechnik üblicherweise eine funktionale, autarke Einheit verstanden, durch welche zusammenhängende Funktionalitäten gebündelt werden und welche über eine definierte Schnittstelle z.B. eines Kommunikationsnetzes zur Verfügung gestellt wird. Für die Nutzung eines Dienstes durch einen Netzknoten ist es daher notwendig, z.B. mittels dienstspezifischer Konfiguration festzulegen, zwischen welchen Netzknoten in welcher Form Daten und Informationen ausgetauscht und welche Funktionalitäten gegenseitig genutzt werden können. Die für Dienste bzw. Anwendungen notwendigen Netzfunktionen werden z.B. von der so genannten Anwendungsebene bzw. auf anwendungsorientierten Schichten zur Verfügung gestellt, welche die Verbindung zu den unteren Netzebenen (z.B. transportorientierte Schichten des sogenannten OSI-Modells) herstellen und auf welchen sich eine Dateneingabe und -ausgabe befindet. Dabei sind heutzutage eine Konfiguration und Verwaltung des Kommunikationsnetzes bzw. der zugehörigen Kommunikationsstruktur und eine anwendungsspezifische Nutzung dieser Kommunikationsstruktur durch die Dienste üblicherweise voneinander getrennt.

Wird beispielsweise eine Endgeräteeinheit (z.B. Messeinheit, Feldgerät, etc.) als neuer Netzknoten in ein Kommunikationsnetz z.B. eines Energieunternehmens in einer Transformatorstation angeschlossen, so muss beispielsweise auf Netzebene die Zugehörigkeit des neuen Netzknotens zum Kommunikationsnetz allgemein sowie eine eventuelle Zugehörigkeit zu einem oder mehreren (gegebenenfalls virtuellen) Sub-Netzen, in welchen z.B. für die anwendungsspezifische Kommunikation notwendigen Gegenstellen bzw. Netzknoten (z.B. Dienstserver, SCADA-System, Überwachungssystem, etc.) enthalten sind, konfiguriert werden. Weiterhin ist es notwendig, den neuen Netzknoten und die jeweiligen Gegenstellen derart zu konfigurieren, dass diese miteinander für die Nutzung der jeweiligen Dienste bzw. Anwendungen kommunizieren bzw. sich gegenseitig adressieren können.

Es kann beispielsweise auch vorkommen, dass Dienste bzw. Anwendungen in einem Kommunikationsnetz mehrfach vorhanden sind - wie z.B. ortsbezogene Anwendungen oder Gegenstellen (z.B. Überwachungssysteme, etc.), von welchen nur eine Gegenstellte oder eine Teilmenge mit dem neuen Netzknoten kommunizieren soll. Weiterhin können Dienste bzw. Dienstfunktionalitäten z.B. aus Performance- oder Sicherheitsgründen redundant ausgelegt sein. Derartige Zugehörigkeiten werden derzeit z.B. auf Netzebene oder bei einer Zugehörigkeit zum selben Kommunikationsnetz auf Anwendungsebene manuell konfiguriert.

Das bedeutet, dass beispielweise für einen neuen Netzknoten Zugehörigkeiten zu einem Kommunikationsnetz und gegebenenfalls zu Sub-Netzen auf Netzebene eingerichtet werden müssen. Weiterhin muss z.B. - allerdings getrennt davon - eine dienst- bzw. anwendungsspezifische Konfiguration durchgeführt werden, welche an die Funktionen und Bedürfnisse der Anwendungen angepasst ist, von denen die Kommunikationsstruktur des Netzes verwendet wird. Insbesondere bei mehrfach im Netz vorhandenen Diensten und/oder als Gegenstellen genutzte Netzknoten kann dies zu einer komplexen und zeitaufwendigen Konfiguration eines neuen Netzknotens führen, welche meist manuell durchgeführt werden muss und eine genaue Kenntnis der jeweils eingesetzten Hardware erfordert. Weiterhin können dabei leicht Fehler bei einer getrennten netz- und dienstspezifischen Konfiguration neuer Netzknoten auftreten - insbesondere wenn z.B. unterschiedliche Generationen von z.B. Endgeräteeinheiten im Netz eingesetzt werden oder die Konfiguration z.B. zumindest teilweise manuell durchgeführt werden muss.

Für eine Konfiguration von Kommunikationsnetzen ermöglicht beispielsweise der Ansatz des so genannten Software Defined Networks (SDN), welche z.B. aus der Schrift "Halaplidis, E. et al.: "Software-Defined Networking (SDN): Layers and Architecture Terminology" RFC 7426; Internet Research Task Force (IRTF); January 2015." bekannt ist, die Kommunikationsstruktur eines Kommunikationsnetzes einfach und dynamisch im Betrieb mittels Software an neue Gegebenheiten anzupassen. Durch SDN wird beispielsweise eine Verlagerung mehr oder weniger stark genutzter (gegebenenfalls virtueller) Systeme auf jeweils passende Hardware-Ressourcen des Kommunikationsnetzes unterstützt. D.h. ein Netzknoten wie z.B. ein Switch oder Router muss nicht jedes Mal neu manuell konfiguriert werden, wenn ein neuer Netzknoten hinzugefügt wird, um z.B. vereinbarte Regeln im Netz (z.B. Routingregeln, Zugangsregeln, etc.) einzuhalten. Durch SDN können derartige Anpassungen z.B. automatisch und zentralisiert mittels eines zentralen SDN-Controllers erfolgen, welcher auf einem Server oder verteilt auf mehreren Servern im Netz ablaufen kann. Dabei wird vom SDN-Controller insbesondere eine Steuerlogik kontrolliert und verwaltet, anhand welcher ein Weiterleitungsverhalten für Datenpakete von Netzknoten wie z.B. Switchen, Routern, etc. geregelt wird.

Auf den Ansatz des Software Defined Networks (SDN) bauen beispielsweise Konzepte wie OpenFlow oder Virtual Tenant Network (VTN) auf. OpenFlow ist dabei z.B. ein Protokoll mit standardisierten Befehlen für eine Kommunikation zwischen dem SDN-Controller und den weiterleitenden Netzknoten (z.B. Switche, Router, etc.). Mit OpenFlow kann beispielsweise auf Hardwarekomponenten wie z.B. Switche oder Router zugegriffen werden, um eine Verarbeitung und Weiterleitung von eintreffenden Datenpaketen vorzugeben.

Beim Virtual Tenant Network von OpenDaylight Project - einem Open Source Projekt mit dem Ziel Software-Defined Networking voranzutreiben - wird beispielsweise zumindest ein von der realen Hardware abstrahiertes, virtuelles Netzwerk gebildet, dessen Struktur von einer Software auf die Konfiguration des SDN-Controllers abgebildet wird. Dadurch werden z.B. logische Verknüpfungen von Netzknoten für die Netzkommunikation von der real eingesetzten Hardware (z.B. Router, Switche, Access-Points, etc.) abstrahiert bzw. separiert. Es können damit Netzknoten in virtuellen Netzen beispielsweise ohne Kenntnis der konkret verwendeten Hardware konfiguriert werden. Allerdings ist es immer noch notwendig, die Zugehörigkeit der Netzknoten zum jeweiligen virtuellen, abstrahierten Netz - d.h. z.B. Schnittstellen, Subnetzzugehörigkeiten, etc. - vorab festzulegen.

Weiterhin kann in einem SDN eine Authentifikation auf Netzebene genutzt werden, um z.B. das Kommunikationsnetz und die darin stattfindende Kommunikation vor ungewollten Teilnehmern bzw. Netzknoten zu schützen. Aus der Schrift "Mattos, D.M.F. et al.: "AuthFlow: Authentication and Access Control Mechanism for Software Defined Networking"; Technical Report, Electrical Engineering Program, April 2014." ist ein Ansatz bekannt, bei welchem ein Zugang und Routen im Kommunikationsnetz basierend auf der Authentifikation des jeweiligen Netzknotens bzw. Teilnehmers - z.B. auf der so genannten Data Link-Ebene bzw. der Schicht 2 des so genannten OSI-Modells - mittels OpenFlow freigegeben wird. Allerdings muss auch hier die Struktur des Kommunikationsnetzes z.B. durch einen Administrator vorgegeben werden und besteht unabhängig von den jeweils integrierten Endgeräteeinheiten und deren Funktionen.

Auf Anwendungsebene erfolgt beispielsweise eine Verknüpfung von Diensten bzw. Anwendungen im Kommunikationsnetz durch statische Konfiguration oder mittels anwendungsspezifischer Middleware. Ein derartiges anwendungsspezifische Middlware-Konzepte ist beispielsweise einen Adressauflösung mittels dem so genannten Domain Name System (DNS), bei welchem z.B. ein bekannter Domainname vom DNS in eine zugehörige IP-Adresse umgesetzt wird, um eine Verbindung zum richtigen Netzknoten herstellen zu können.

Eine weitere Möglichkeit ist z.B. das so genannte Service Discovery mittels unterschiedlicher Kommunikationsprotokolle. Service Discovery bezeichnet z.B. eine automatische Erkennung von Diensten in einem Kommunikationsnetz, bei welchen durch Kommunikationsprotokolle z.B. beschrieben wird, wie sich die Dienste finden, um miteinander kommunizieren zu können. Dabei können sich die Dienste entweder zentral in einem Register registrieren und darüber gefunden werden oder es wird von Diensten z.B. mittels Broadcasting nach einem bestimmten Dienst im Kommunikationsnetz gefragt, wobei der gesuchte Dienst oder ein entsprechender Register antwortet.

Eine weitere Möglichkeit eines anwendungsspezifischen Middleware-Konzepts stellt z.B. auch die Kommunikation über einen sogenannten Message Broker dar. Der sogenannte Message Broker ist ein zwischengeschaltetes Vermittlungsprogrammmodul, durch welches z.B. eine Nachricht eines formalen, senderspezifischen Nachrichtenprotokolls in ein empfängerspezifisches Nachrichtenprotokoll umgesetzt wird. Der Message Broker wird beispielsweise in Kommunikationsnetzen eingesetzt, in welchen von Anwendungen mittels Austausch von formal definierten Nachrichten kommuniziert wird.

Allerdings weisen alle diese Konzepte für eine Verknüpfung von Diensten bzw. Anwendungen im Kommunikationsnetz den Nachteil auf, dass auf eine Kommunikationsstruktur des Netzes aufgesetzt wird, welche bereits vorher mittels netzspezifischer Konfiguration festgelegt werden muss und es keine direkte Verbindung zur Konfiguration der Kommunikationsstruktur des Kommunikationsnetzes gibt. Vor allem bei Änderungen in der Kommunikationsstruktur des Netzes - z.B. Hinzufügen eines neuen Netzknotens, Austausch eines Netzknotens oder Entfernen eines Netzknotens - kann sich die Konfiguration daher zeitaufwendig und komplex gestalten. Weiterhin kann eine zusätzliche Middleware für eine anwendungsspezifische Kommunikation im Netz zu gegebenenfalls unnötiger Kommunikation und zusätzlichem Datenverkehr im Netz führen.

Die Veröffentlichung WO 2017/186938 A1 zeigt ein computerimplementiertes Verfahren zum Steuern eines softwaredefinierten Netzwerks (SDN). Das Verfahren umfasst das Bereitstellen eines oder mehrerer Client-Portale, die konfiguriert sind, um es Benutzern zu erleichtern, vernetzte Geräte zu steuern. Ferner ist das Generieren von Konfigurationsdaten basierend auf Eingaben von Benutzern über die Kundenportale dargestellt. Außerdem ist eine Bereitstellung eines Master-SDN-Controllers zum Verwalten der Datenflusssteuerung im SDN-Netzwerk vorgesehen. Der Master-SDN-Controller ist betreibbar, um Routing-Daten für die vernetzten Geräte zu erzeugen. Es erfolgt ein Erzeugen einer Vielzahl von diskreten Co-Controllern durch den Master-SDN-Controller, von denen jeder einem bestimmten Endbenutzer zugeordnet ist. Jeder SDN-Co-Controller enthält Konfigurationsdaten und Routing-Daten für ein zugehöriges Netzwerkgerät. Dann erfolgt ein Versenden des SDN-Co-Controllers durch den Master-SDN-Controller an die vernetzten Geräte, die den jeweiligen Endbenutzern zugeordnet sind, um diese zu steuern, sowie ein Installieren des SDN-Co-Controllers auf den vernetzten Geräten. Anschließend erfolgt ein Registrieren der installierten SDN-Co-Controller beim Master-SDN-Controller zur Steuerung des Datenroutings von den vernetzten Geräten und zur Steuerung der Konfiguration der vernetzten Geräte.

In der Veröffentlichung EP 3185476 A1 ist ein computerimplementiertes Verfahren zur Erkennung und Bereitstellung eines Geräts in einem Kommunikationssystem offenbart, umfassend das Empfangen von Eingabedaten an einem Server, um die Bereitstellung einer Ressource einzuleiten. Bereitstellungsdaten werden an die Ressource gesendet, um die Präsentation eines bestimmten Bereitstellungsobjekts an der Ressource zu ermöglichen. Benutzerdaten werden auch an einen registrierten Client gesendet, um eine interaktive Präsentation einer Vielzahl von Bereitstellungsobjekten, die das gegebene Bereitstellungsobjekt umfasst, in Bezug auf den registrierten Client zu ermöglichen. Das Verfahren umfasst auch das Verknüpfen der Ressource mit dem registrierten Client als Reaktion auf eine Benutzereingabe, die das gegebene Bereitstellungsobjekt aus der Vielzahl von Bereitstellungsobjekten auswählt.

### Darstellung der Erfindung

Der Erfindung liegt daher die Aufgabe zugrunde, ein Verfahren zum Konfigurieren eines Kommunikationsnetzes anzugeben, bei welchen auf einfache Weise eine Verbindung zwischen einer Konfiguration eines Kommunikationsnetzes auf Netzebene mit einer anwendungsspezifischen Konfiguration unter Berücksichtigung von Sicherheitsaspekten, insbesondere bei Umgestaltungen des Kommunikationsnetzes, automatisiert ermöglicht wird. Diese Aufgabe wird durch Verfahren zum Konfigurieren eines Kommunikationsnetzes der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Der Hauptaspekt der erfindungsgemäß vorgeschlagenen Lösung besteht darin, dass dadurch auf einfache Weise eine Verbindung zwischen der Konfiguration bzw. Anpassung des Kommunikationsnetzes und der anwendungsspezifischen Konfiguration bei Hinzufügen eines neuen Netzknotens hergestellt wird. Durch das erfindungsgemäße Verfahren kann eine Integration eines neuen Netzknoten (wie z.B. einer neuen Endgeräteeinheit (z.B. Messgerät, Rechnereinheiten, IP-Endgeräte, Messeinheiten, Sensoren, Steuer- und/oder Regeleinheit, Aktoren, Feldgeräte, etc.) oder eines neuen weitervermittelnden Netzknotens (z.B. Router, Switch)) sehr einfach automatisiert und mit relativ geringem Zeitaufwand durchgeführt werden. Ein neuer Netzknoten muss beispielsweise nur mehr mit seiner zugehörigen Identifikation bei der zentralen Kontrolleinheit registriert sowie authentifiziert und die entsprechenden Funktionsklassen zugeordnet werden. Nach einer Installation des jeweiligen Netzknoten im Kommunikationsnetz erfolgt die entsprechende Konfiguration auf Netz- und Anwendungsebene weitgehend automatisch, wodurch der Aufwand sowie eine Fehleranfälligkeit wesentlich reduziert werden.

Weiterhin können durch das Ableiten von Konfigurations- und Kommunikationsdaten bzw. einer neuen Kommunikationsstruktur für einen neuen Netzknoten aus dessen zumindest einer Funktionsklasse idealerweise schnellere Kommunikationsverbindungen im Kommunikationsnetz (z.B. durch Nutzung direkter Routen) hergestellt werden. Zusätzlicher bzw. belastender Kommunikations- bzw. Datenverkehr im Netz kann z.B. reduziert werden, da dadurch beispielsweise eine Kommunikation über so genannte Message Broker eingeschränkt oder z.B. so genannte Lastverteilungs- bzw. Load-Balancer-System eingespart werden können. Außerdem bietet das erfindungsgemäße Verfahren vor allem durch die Authentifikation der Netzknoten mittels einer zugehörigen eindeutigen Identifikation zusätzlich den Vorteil einer abgesicherten Kommunikation für jene Dienste bzw. Anwendungen, von welchen die Kommunikationsstruktur des Kommunikationsnetzes genutzt wird. Das erfindungsgemäße Verfahren ermöglicht damit eine einfachere, automatisierte sowie kostengünstiger Konfiguration und Integration von neuen Netzknoten in ein Kommunikationsnetz, bei welchen zusätzlich Sicherheitsaspekte für eine Kommunikation im Kommunikationsnetz und die im Netz nutzbaren Anwendungen berücksichtigt wird.

Dabei ist es vorteilhaft, wenn von der zumindest einen Funktionsklasse eine dienstspezifische Funktionalität des jeweiligen Netzknoten festgelegt wird, und Schnittstellen zur Kommunikationsstruktur umfasst werden, welche von der Funktionalität des jeweiligen Netzknoten bereitgestellt und/oder benötigt werden. Durch die Funktionsklassen können beispielsweise sehr einfach redundant, ortsabhängig und/oder kundenspezifisch im Kommunikationsnetz verfügbare Funktionalitäten (z.B. ortsabhängiges Überwachungssystem, ortsbezogene oder kundenspezifische Applikationsserver, etc.) den entsprechenden Netzknoten zugeordnet werden. Weiterhin kann durch eine Standardisierung der Funktionsklassen eine einfachere Zuordnung zu den Netzknoten bei der Registrierung bei der zentralen Kontrolleinheit erfolgen. So kann beispielsweise der Aufwand für einen Einbau bzw. eine Integration von Endgeräteeinheiten unterschiedlicher Versionen, Generationen oder Hersteller ins Kommunikationsnetz erheblich vereinfacht werden.

Eine bevorzugte Weiterbildung des erfindungsgemäßen Verfahrens sieht vor, dass die eindeutige Identifikation für den jeweiligen Netzknoten von der zentralen Kontrolleinheit vorgegeben wird. Die eindeutige Identifikation wird dabei beispielsweise bei der Registrierung des jeweiligen Netzknotens von der zentralen Kontrolleinheit erstellt und dem Netzknoten zugeordnet. Auf diese Weise kann sehr leicht die Eindeutigkeit der Identifikation sichergestellt werden.

Alternativ kann die eindeutige Identifikation für den jeweiligen Netzknoten vom jeweiligen Netzknoten bei der Registrierung zur Verfügung gestellt werden. Die eindeutige Identifikation kann beispielsweise im oder am jeweiligen Netzknoten wie z.B. einer Endgeräteeinheit, etc. von Hersteller, vom Netzbetreiber, etc. hinterlegt werden. Bei der Registrierung des jeweiligen Netzknoten wird diese eindeutige Identifikation des jeweiligen Netzknotens dann an die zentrale Kontrolleinheit übertragen. Dazu können beispielsweise Übertragungstechnologien wie z.B. Bluetooth, Nahfeldkommunikation oder RFID-Technologie genutzt werden.

Idealerweise kann die Zuordnung der zumindest einen Funktionsklasse zur eindeutigen Identifikation des jeweiligen Netzknoten automatisch beispielsweise bei der Registrierung des Netzknotens erfolgen. Dies kann vor allem dann genutzt werden, wenn bereits entsprechende Definitionen und/oder Profile für verschiedene Netzknoten (z.B. Messgerät, Rechnereinheiten, IP-Endgeräte, Messeinheiten, Sensoren, Steuer- und/oder Regeleinheit, Aktoren, Feldgeräte, Router, Switch, etc.) existieren. Diese Profile können beispielsweise durch den jeweiligen Hersteller in einer standardisierten Beschreibungssprache zur Verfügung gestellt und z.B. in der zentralen Kontrolleinheit und/oder einer zugehörigen Datenbank für eine automatisierte Zuordnung zu neu registrierten Knoten hinterlegt werden.

Bei einer zweckmäßigen Ausgestaltung des erfindungsgemäßen Verfahrens wird von der zentralen Kontrolleinheit eine Verknüpfungseinheit umfasst. Durch die Verknüpfungseinheit wird die zumindest eine Funktionsklasse des jeweiligen Netzknotens sowie die eindeutige Identifikation des jeweiligen Netzknotens mit der Kommunikationsstruktur des Kommunikationsnetzes verknüpft. D.h. durch die Verknüpfungseinheit werden aus der zumindest einen Funktionsklasse, welche der eindeutigen Identifikation des jeweiligen Netzknotens zugeordnet ist, Konfigurations- und Kommunikationsdaten abgeleitet, welche dann in Anforderungen für einen Konfiguration auf Netz- und/oder Anwendungsebene für die zentrale Kontrolleinheit umgewandelt werden können.

Es ist weiterhin günstig, wenn der zentralen Kontrolleinheit eine Datenbankeinheit zugeordnet wird. In dieser Datenbank können dann die eindeutigen Identifikationen der jeweiligen Netzknoten gemeinsam mit den jeweils zugeordneten Funktionsklassen hinterlegt werden.

Es ist vorteilhaft, wenn für die Konfigurationsinformation des jeweiligen Netzknotens Nachrichten mit einem so genannten Authentication Header (AH) verwendet werden, welcher z.B. durch die Schrift "Kent, S. et al.: "IP Authentication Header (AH)" RFC 2402; Internet Research Task Force (IRTF); November 1998." beschrieben wird. Vom Authentication Header wird innerhalb des Internet Protocol Version 6 (IPv6) für eine Authentizität der zu übertragenden Daten und Informationen sowie für eine Authentifizierung jenes Knotens gesorgt, von welchem die Daten gesendet werden. Damit kann auf einfache Weise ein Daten aussendender Knoten sicher und eindeutig authentifiziert werden. Das Aussenden einer Nachricht mit Authentication Header kann beispielsweise als so genannter Broadcast oder so genannter Multicast ausgestaltet sein.

Eine bevorzugte Ausgestaltung des erfindungsgemäßen Verfahrens sieht vor, dass für die Konfigurationsinformation des jeweiligen Netzknotens eine Nachricht nach dem sogenannten Neighbor Discovery Protocol oder NDP insbesondere zusammen mit dem so genannten Authentication Header (AH) verwendet wird. Das Neighbor Discovery Protocol (NDP ist beispielsweise in der Schrift "Narten, T. et al.: "Neighbor Discovery for IP version 6" RFC 4861; Internet Research Task Force (IRTF); September 2007." Beschrieben und z.B. beim Einsatz von Internet Protocol Version 6 (IPv6) von den Netzknoten eines Kommunikationsnetzes, insbesondere weiterleitenden Knoten wie z.B. Routern, etc. verwendet, um Adressen von anderen im Kommunikationsnetz befindlichen Netzknoten ausfindig zu machen und gegebenenfalls zu aktualisieren, damit zu übertragende Informationen und Daten in Form von Datenpaketen weitergeleitet werden können. Durch die vor allem mittels der NDP-Nachricht verbreiteten Authentication Header eines neu in das Kommunikationsnetz eingebrachten Netzknoten kann auf sehr einfache Weise die automatische Konfiguration des Netz- und Dienstzugangs für diesen Netzknoten gestartet werden. Das Aussenden der NDP-Nachricht bzw. einer NDP-Nachricht mit Authentication Header kann beispielsweise ebenfalls als so genannter Broadcast oder so genannter Multicast ausgestaltet sein.

Idealerweise wird im Kommunikationsnetz das sogenannte Software-Defined Networking-Konzept eingesetzt. Software-Defined Networking (SDN) ist ein Ansatz, welcher auf einfache Weise einen Aufbau und eine Administration eines Kommunikationsnetzes sowie eine Anpassung der Kommunikationsstruktur des Kommunikationsnetzes während eines Betriebs mittels Software an neue Gegebenheiten ermöglicht. Dieser Ansatz ist z.B. aus der Schrift "Halaplidis, E. et al.: "Software-Defined Networking (SDN): Layers and Architecture Terminology" RFC 7426; Internet Research Task Force (IRTF); January 2015." bekannt. Durch SDN können Netzanpassungen z.B. automatisch und zentralisiert mittels eines zentralen SDN-Controllers erfolgen, welcher auf einem Server oder verteilt auf mehrere Server im Netz ablaufen kann. Dabei wird vom SDN-Controller insbesondere eine Steuerlogik kontrolliert und verwaltet, anhand welcher ein Weiterleitungsverhalten für Datenpakete von Netzknoten wie z.B. Switchen, Routern, etc. geregelt wird.

### Kurzbeschreibung der Zeichnung

Die Erfindung wird nachfolgend in beispielhafter Weise anhand der beigefügten Figuren erläutert. Es zeigen:
Figur 1 schematisch ein beispielhaftes Kommunikationsnetz, in welchem das erfindungsgemäße Verfahren zum Konfigurieren durchführbar ist;
Figur 2 einen beispielhaften Ablauf des erfindungsgemäßen Verfahrens zum Konfigurieren eines Kommunikationsnetzes;
Figur 3 schematisch eine beispielhafte, virtuelle Kommunikationsstruktur nach Durchführung des erfindungsgemäßen Verfahrens
Figur 4 eine beispielhafte Darstellung der am erfindungsgemäßen Verfahren beteiligten Funktionseinheiten

### Ausführung der Erfindung

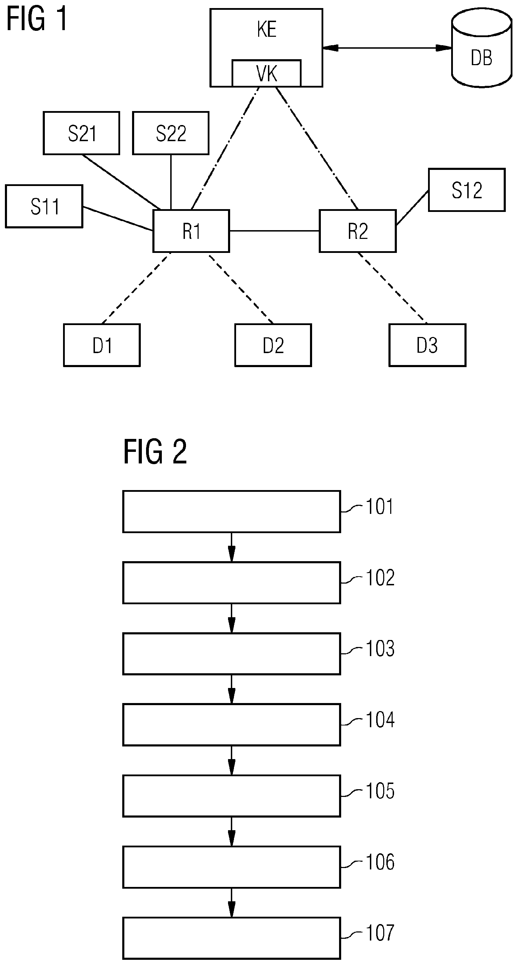

Figur 1 zeigt beispielhaft und schematisch ein Kommunikationsnetz, in welchem das erfindungsgemäße Verfahren zum Konfigurieren eines Kommunikationsnetzes durchführbar ist. Das beispielhafte Kommunikationsnetz, welche z.B. ein Kommunikationsnetz eines Energieunternehmens für eine Überwachung und Steuerung eines Niederspannungsnetzes sein kann, weist eine Mehrzahl an Netzknoten D1, D2, D3, R1, R2 sowie einen zentrale Kontrolleinheit KE auf. Die zentrale Kontrolleinheit kann beispielsweise eine Verknüpfungseinheit VK aufweisen. Weiterhin kann der zentralen Kontrolleinheit eine Datenbank DB zugeordnet sein.

Vom Kommunikationsnetz wird eine Kommunikationsstruktur zur Verfügung gestellt, welche von Diensten bzw. Anwendungen in unterschiedlichen Ausprägungen S11, S12, S21, S22 bzw. von den Netzknoten entsprechend ihrer jeweiligen Funktionalitäten genutzt wird.

Die beispielshaften Netzknoten D1, D2, D3 sind dabei z.B. als Endgeräteeinheiten (z.B. Messgerät, Rechnereinheiten, IP-Endgeräte, Messeinheiten, Sensoren, Steuer- und/oder Regeleinheit, Aktoren, Feldgeräte, etc.) ausgeführt. Diese Netzknoten D1, D2, D3 weisen damit bestimmte Funktionalitäten- wie z.B. Bereitstellen von Mess- und/oder Steuerdaten, Konfigurationsfähigkeit bzw. Bedarf an Updates einer Software, Bedarf an Steuerdaten oder Regeldaten, etc. auf bzw. stellen bestimmte Schnittstellen für Anwendungen zur Verfügung. Dabei kann beispielsweise ein erster Netzknoten D1 die Funktionalitäten "Bereitstellen von Messdaten" und "Konfigurationsfähigkeit" aufweisen. Ein zweiter Netzknoten D2 kann z.B. nur die Funktionalität "Bereitstellen von Messdaten" aufweisen, während von einem dritten Netzknoten D3 beispielsweise wieder die Funktionalitäten "Bereitstellen von Messdaten" und "Konfigurationsfähigkeit" realisiert werden.

Weitere Netzknoten R1, R2 können beispielsweise als weiterleitende Netzknoten (z.B. Router, Switch, etc.) ausgeführt sein und dazu eingesetzt werden, Daten und Information innerhalb des Kommunikationsnetzes weiterzuleiten bzw. zwischen den Endgeräteeinheiten D1, D2, D3 zu vermitteln. D.h. von den weiterleitenden Netzknoten R1, R2 wird insbesondere die Funktionalität des Weiterleiten und/oder Vermittelns von Daten - insbesondere Datenpaketen - im Kommunikationsnetz (z.B. von einem Ursprungsknoten zu einem Zielknoten) bereitgestellt.

Weiterhin sind im beispielshaften Kommunikationsnetz beispielsweise zwei Anwendungen verfügbar, wobei eine erste Anwendung ortsabhängig ist und daher in zwei ortsabhängigen Ausprägungen S11, S12 ausgeführt ist. D.h. die jeweilige Ausprägung S11, S12 der ersten Anwendung ist z.B. einem jeweiligen lokalen, weiterleitendenden Netzknoten R1, R2 zugeordnet, welchem z.B. ein bestimmter Teilbereich des Kommunikationsnetzes zugeordnet ist. Ein derartiger Dienst S11, S12 ist z.B. eine Anwendung zum Überwachen von Endgeräteeinheiten D1, D2, D3 eines bestimmten Teilbereichs des Kommunikationsnetzes bzw. des zugehörigen Energienetzes. Im beispielshaft in Figur 1 dargestellten Kommunikationsnetz ist einem ersten weiterleitenden Netzknoten R1 z.B. ein Netzbereich mit dem ersten und zweiten Netzknoten D1, D2 zugeordnet und einem zweiten weiterleitenden Netzknoten R2 ein Netzbereich mit dem dritten Netzknoten D3. Eine zweite Anwendung kann beispielsweise aus Performancegründen redundant ausgeführt sein und steht damit z.B. zweimal in der gleichen Ausführung S21, S22 im Kommunikationsnetz zur Verfügung.

Weiterhin kann das Kommunikationsnetz für das sogenannte Software-Defined Networking (SDN) eingerichtet sein. Dabei weist die zentrale Kontrolleinheit KE beispielsweise die Funktion eines sogenannten SDN-Controllers auf. Weiterhin können die weiterleitenden Netzknoten R1, R2 als sogenannte SDN-Switche oder SDN-Router eingerichtet sein.

Soll beispielsweise der erste Netzknoten D1 neu zum Kommunikationsnetz hinzugefügt werden oder ein bestehender Netzknoten durch eine neue Version bzw. einen neuen Netzknoten ersetzt werden und an der Kommunikation im Kommunikationsnetz teilnehmen, so muss dieser erste Netzknoten D1 authentifiziert werden. Dazu können beispielsweise alle von diesem ersten Netzknoten D1 ausgesendeten Daten auf einer Protokollebene signiert werden. Im Internet Protocol Version 6 (IPv6) kann dies z.B. durch Sicherung der Daten mittels eines sogenannten Authentifikation-Header geschehen. Die zentrale Kontrolleinheit muss dann in der Lage sein, diese Signierung verifizieren zu können, falls derart signierte Daten von einem weiterleitenden Netzknoten R1, R2 an die zentrale Kontrolleinheit weitergeleitet werden. Dabei kann sich jeder Netzknoten D1, D2, D3 mehrfach - je nach seinen jeweiligen Funktionalitäten bzw. je nach bereitgestellten und/oder benötigten Schnittstellen - im Kommunikationsnetz authentifizieren.

Um eine Teilnahme des ersten Netzknotens D1, welche neu hinzugefügt wurde, an der Kommunikation des Kommunikationsnetzes zu ermöglichen, wird das erfindungsgemäße Verfahren durchlaufen. Figur 2 zeigt dazu in schematischer Weise einen beispielhaften Ablauf des erfindungsgemäßen Verfahrens zum Konfigurieren eines Kommunikationsnetzes, wie z.B. beispielhaft in Figur 1 dargestellt.

Dazu wird in einem Registrierungsschritt 101 der neu hinzuzufügende, erste Netzknoten D1 mit einer eindeutigen Identifikation bei der zentralen Kontrolleinheit KE registriert. Diese eindeutige Identifikation wird beispielsweise vom ersten Netzknoten D1 für die Signierung der von ihm ausgesendeten Daten und damit für eine Authentifizierung im Kommunikationsnetz verwendet. Die eindeutige Identifikation des neuen Netzknotens D1 kann dabei beispielsweise durch die zentrale Kontrolleinheit KE vorgegeben werden. Alternativ kann die eindeutige Identifikation des neuen Netzknotens D1 auch vom neuen Netzknoten D1 selbst im Registrierungsschritt 101 zur Verfügung gestellt werden. So kann die eindeutige Identifikation z.B. an der oder in der jeweiligen Endgeräteeinheit, welche als neuer Netzknoten D1 im Kommunikationsnetz hinzugefügt werden soll, gespeichert sein. Für eine Übertragung der eindeutigen Identifikation kann beispielsweise Bluetooth oder RFID-Technologie genutzt werden, um Fehler durch z.B. eine manuelle Eingabe zu vermeiden.

Weiterhin wird im Registrierungsschritt 101 der registrierten Identifikation des neuen Netzknotens D1 zumindest eine Funktionsklasse zugeordnet. Von der zumindest einen Funktionsklasse wird eine dienst- bzw. anwendungsspezifische Funktionalität des neuen Netzknotens D1 beschrieben. Weiterhin wird von der zumindest einen zugeordneten Funktionsklasse definiert, welche Schnittstellen zur Kommunikationsstruktur der neue Netzknoten D1 zur Verfügung stellt und/oder für seine Funktionalität benötigt. Vom neuen Netzknoten D1 werden beispielsweise zwei Funktionalitäten bereitgestellt: einerseits werden Messdaten z.B. für ein weiterverarbeitendes System (z.B. SCADA-System) über eine Schnittstelle bereitgestellt; andererseits werden vom neuen Netzknoten z.B. Updates für einen anwendungsspezifische Software von einem entsprechenden Anwendungsserver über eine Schnittstelle benötigt. Dem neuen Netzknoten D1 bzw. seiner eindeutigen Identifikation werden daher im Registrierungsschritt 101 beispielsweise zwei Funktionsklassen zugeordnet - eine erste Funktionsklasse "Messeinheit" und eine zweite Funktionsklasse "konfigurierbare Einheit". Die Zuordnung der zwischen eindeutiger Identifikation und der zumindest einen Funktionsklasse kann dabei entweder manuell oder automatisiert durchgeführt werden. Die eindeutige Identifikation des Netzknotens D1 mit der zumindest einen zugeordneten Funktionsklasse kann z.B. in der Datenbank DB abgespeichert werden, welche der zentralen Kontrolleinheit KE zugeordnet ist.

In einem Installationsschritt 102 wird der neue Netzknoten D1 im Kommunikationsnetz hinzugefügt. Dabei kann z.B. eine neue Endgeräteeinheit D1 (oder auch ein neuer weiterleitender Netzknoten R1, R2) neu im Kommunikationsnetz installiert werden oder ein Netzknoten D1 wird durch einen neuen bzw. eine neue Version des jeweiligen Netzknotens D1 im Kommunikationsnetz ersetzt. In der Folge wird vom neu im Kommunikationsnetz installierten Netzknoten D1 in einem Identifikationsschritt 103 eine Konfigurationsinformation z.B. in initialen Nachrichten ausgesendet, um eine Konfiguration für seinen Zugang zum Kommunikationsnetz zu starten. Von dieser Konfigurationsinformation wird zumindest eine eindeutige Identifikation des neuen Netzknoten D1 umfasst. Die Konfigurationsinformation kann beispielsweise in Form von so genannten Link-Layer-Adressen in initialen Nachrichten nach dem so genannten Neighbor Discovery Protocol (NDP) vom neuen Netzknoten D1 ausgesendet werden, wobei das so genannte Neighbor Discovery Protocol (NDP) z.B. beim Einsatz von Internet Protocol Version 6 (IPv6) in Kommunikationsnetzen verwendet werden kann. Die eindeutige Identifikation kann dabei idealerweise z.B. mittels eines so genannten Application Headers kryptographisch abgesichert sein. Eine Signatur der eindeutigen Identifikation kann dann vom neuen Netzknoten D1 verwendet werden, um die ausgesendeten Daten eindeutig zu signieren.

In einem Weiterleitungsschritt 104 wird die Konfigurationsinformation des neuen Netzknotens D1 z.B. von einem weiterleitenden Knoten R1, R2 im Kommunikationsnetz an die zentrale Kontrolleinheit gesendet.

In einen Authentifikationsschritt 105 wird der neuen Netzknoten D1 anhand der eindeutigen Identifikation in der ausgesendeten Kommunikationsinformation durch die zentrale Kontrolleinheit KE authentifiziert und verifiziert. So kann von der zentralen Kontrolleinheit KE beispielsweise die Signierung der Kommunikationsinformation des neuen Netzknotens mit der eindeutigen Identifikation erkannt werden.

Anhand der eindeutigen Identifikation kann dann von der zentralen Kontrolleinheit die zumindest eine Funktionsklasse des neuen Netzknotens - z.B. durch Suche in der zugeordneten Datenbank DB - ermittelt werden. Auf Basis der zumindest einen zugeordneten Funktionsklasse können in einem Verknüpfungsschritt 106 für den neu hinzugefügten Netzknoten D1 Konfigurations- und Kommunikationsdaten abgeleitet werden. Diese Konfigurations- und Kommunikationsdaten stellen beispielsweise eine anwendungsspezifische Kommunikationsstruktur (z.B. ein virtuelles, dienstspezifisches Kommunikationsnetz) für neuen Netzknoten bzw. für seine jeweilige Funktionalität dar. Die Konfigurations- und Kommunikationsdaten können dann in eine Konfigurationsvorgabe für die zentrale Kontrolleinheit umgesetzt werden. Dazu kann die in der zentralen Kontrolleinheit vorgesehene Verknüpfungseinheit eingesetzt werden, durch welche die zumindest eine Funktionsklasse, welche dem neuen Netzknoten D1 zugeordnet ist, mit der Kommunikationsstruktur des Kommunikationsnetzes verknüpft wird.

Im vorliegenden Beispiel sind dem neu hinzugefügten Netzknoten D1 bzw. der zugehörigen, eindeutigen Identifikation z.B. zwei Funktionsklassen - die erste Funktionsklasse "Messeinheit" und die zweite Funktionsklasse "konfigurierbare Einheit" zugeordnet. Es werden daher im Verknüpfungsschritt 106 erste Konfigurations- und Kommunikationsdaten für die erste Funktionsklasse "Messeinheit" und zweite Konfigurations- und Kommunikationsdaten für die zweite Funktionsklasse "konfigurierbare Einheit" abgeleitet. Dabei können die Konfigurations- und Kommunikationsdaten unterschiedliche Konfigurationsvorgaben für die zentrale Kontrolleinheit KE aufweisen, da für eine Umsetzung jeweils unterschiedliche Funktionalitäten, Schnittstellen, Kommunikationspartner vom neuen Netzknoten D1 bereitgestellt bzw. benötigt werden.

In einem Konfigurationsschritt 107 wird dann die Kommunikationsstruktur des Kommunikationsnetzes automatisch anhand der auf Basis der Funktionsklassen des neuen Netzknoten D1 ermittelten Konfigurations- und Kommunikationsdaten derart umkonfiguriert, dass vom neu hinzugefügten Netzknoten D1 an der Kommunikation im Kommunikationsnetz teilgenommen werden kann. D.h. es werden z.B. weiterleitende Netzknoten R1, R2 von der zentralen Kontrolleinheit derart umkonfiguriert, dass der neu hinzugefügte Netzknoten D1 und damit seine Kommunikation für die Dienste bzw. Anwendungen, für welche von ihm Funktionalitäten bereitgestellt und/oder benötigt werden, in entsprechende (virtuelle) Sub-Netze gruppiert und isoliert wird. In diesen anwendungsspezifischen, automatisch konfigurierten (virtuellen) Sub-Netzen kann dann die Konfiguration für den neu hinzugefügten Netzknoten D1 abgeschlossen werden. Dabei können beispielsweise anwendungsspezifisch bzw. in Abhängigkeit vom jeweiligen Sub-Netz Adressen (z.B. IPv6 Adressen) zugewiesen werden und die Kommunikation zu den jeweiligen anwendungsspezifischen Partner-Netzknoten aufgebaut werden.

Im beispielhaften Kommunikationsnetz - dargestellt in Figur 1 - sind z.B. zwei Anwendungen verfügbar, wobei die erste Anwendung ortsabhängig und die zweite Anwendung redundant ausgeführt ist. Anhand der dem neuen Netzknoten D1 zugeordneten Funktionsklassen wird von der zentralen Kontrolleinheit KE erkannt, dass vom neu hinzugefügten Netzknoten D1 beide Anwendungen genutzt werden. Anhand der aus den Funktionsklassen (z.B. "Messeinheit"; "konfigurierbare Einheit"), welche dem neu hinzugefügten Knoten D1 über die eindeutige Identifikation zugeordnet sind, abgeleiteten Konfigurations- und Kommunikationsdaten wird der neu hinzugefügte Netzknoten D1 z.B. aufgrund seiner Örtlichkeit einer ersten Ausprägung S11 des ersten Dienstes und z.B. aus Performancegründen einer ersten Ausprägung S21 des zweiten Dienstes zugeordnet. Daraus ergeben sich dann z.B. die jeweiligen anwendungs- bzw. dienstspezifischen (virtuellen) Sub-Netze für den neu hinzugefügten Netzknoten D1 bzw. für die von ihm bereitgestellten und/oder benötigten Funktionalitäten.

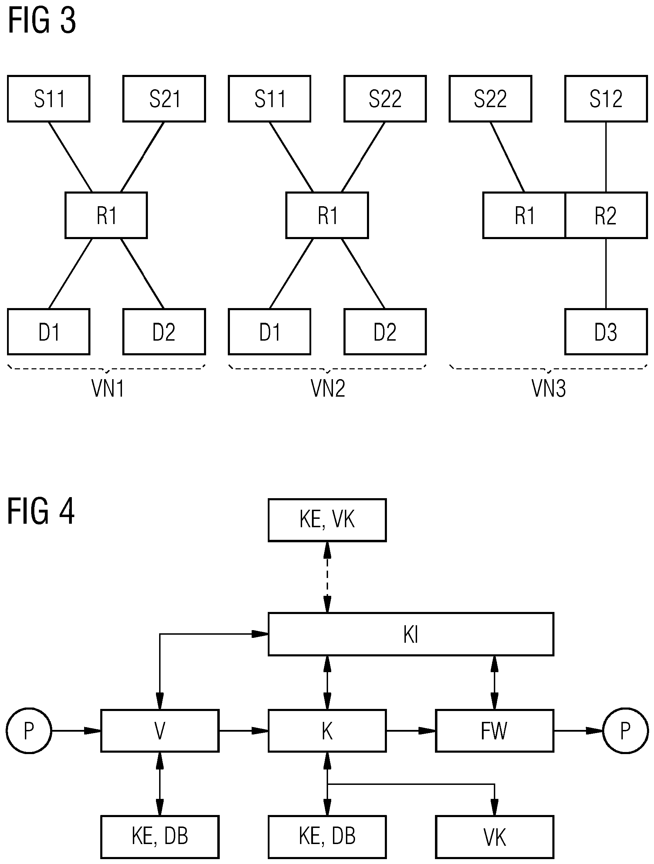

In Figur 3 ist schematisch eine beispielhafte, virtuelle Kommunikationsstruktur des beispielhaften Kommunikationsnetzes aus Figur 1 nach Durchführung des erfindungsgemäßen Verfahrens bzw. nach Hinzufügen des weiteren Netzknotens D1 dargestellt. Aus Sicht der im Kommunikationsnetz beispielhaft vorhandenen Netzknoten bzw. Endgeräteeinheiten D1, D2, D3 ergeben sich z.B. drei virtuelle Sub-Netze VN1, VN2, VN3. Dabei werden über ein erstes virtuelles Sub-Netz VN1 der neu hinzugefügte, erste Netzknoten D1 mit den Funktionalitäten "Bereitstellen von Messdaten" und "Konfigurationsfähigkeit" bzw. Funktionsklassen "Messeinheit" und "konfigurierbare Einheit" und der zweite Netzknoten D2 mit der Funktionalität "Bereitstellen von Messdaten" über den ersten weiterleitenden Netzknoten R1 mit der ersten und zweiten Anwendung verknüpft. Dem ersten und dem zweiten Netzknoten D1, D2 wird dabei die erste Ausprägung S11 der ersten, ortsabhängigen Anwendung aufgrund ihrer Örtlichkeit (z.B. Anbindung an den ersten weiterleitenden Netzknoten R1) zugeordnet. Weiterhin ist dem ersten und dem zweiten Netzknoten D1, D2 über das virtuelle, erste Sub-Netz VN1 z.B. aus Performancegründen die erste Ausprägung S21 des redundanten zweiten Dienstes zugeordnet.

Weiterhin kann ein zweites, virtuelles Sub-Netz VN2 gebildet werden, über welches der erste und der zweite Netzknoten D1, D2 über den ersten weiterleitenden Knoten R1 einerseits wieder mit der ersten Ausprägung S11 des ersten ortabhängigen Dienstes verbunden sind, aber andererseits alternativ mit der zweiten Ausprägung S22 des redundanten Dienstes verknüpft werden. Die zweite Ausprägung S22 des redundanten Dienstes kann von den Netzknoten D1, D2 bzw. ihren Funktionalitäten genutzt werden, wenn die erste Ausprägung S21 des zweiten Dienstes z.B. wegen Überlastung nicht oder nicht im notwendigen Ausmaß zur Verfügung steht.

Weiterhin kann ein drittes virtuelles Sub-Netz VN3 gebildet werden, über welches z.B. der dritte Netzknoten D3, von welchem z.B. die Funktionalitäten "Bereitstellen von Messdaten" und "Konfigurationsfähigkeit" realisiert werden, über die weiterleitenden Netzknoten R1, R2 an die beiden Anwendungen angebunden ist. Dabei ist dem dritten Netzknoten D3 z.B. wegen seiner Örtlichkeit (z.B. Nähe/Anbindung an den zweiten weiterleitenden Knoten R2) die zweite Ausprägung S12 des ersten Dienstes zugeordnet. Aus Performancegründen ist der dritte Netzknoten D3 im dritten, virtuellen Sub-Netz VN3 über beide weiterleitenden Netzknoten R1, R2 mit der zweiten Ausprägung S22 der zweiten Anwendung verknüpft.

Die Zuordnungen der Netzknoten D1, D2, D3 können im laufenden Betrieb an Gegebenheiten (z.B. Datenverkehr im Netz, Auslastung von Servereinheiten, etc.) dynamisch angepasst werden. Die in Figur 3 dargestellten virtuellen Sub-Netze, welche durch das erfindungsgemäße Verfahren in einem Kommunikationsnetz in Abhängigkeit von den jeweiligen Funktionalitäten der Netzknoten gebildet werden können, sind rein beispielhaft.

Figur 4 zeigt in beispielhafter und schematischer Weise die am erfindungsgemäßen Verfahren beteiligten, funktionalen Einheiten bzw. Funktionseinheiten. Für eine Umsetzung des erfindungsgemäßen Verfahrens müssen diese Funktionseinheiten nicht unbedingt als abgegrenzte Module ausgeführt sein, sondern können beispielsweise auch auf mehrere funktionale Einheiten aufgeteilt sein oder modular ausgestaltet sein.

Von einer Funktionseinheit zur Netzinformation KI werden z.B. Informationen zur aktuellen Topologie des Kommunikationsnetzes bereitgestellt. Weiterhin kann mittels dieser Funktionseinheit zur Netzinformation KI eine Topologie der Kommunikationsnetzes - z.B. durch Steuerung bzw. auf Anweisung der zentralen Kontrolleinheit KE und gegebenenfalls mit Unterstützung durch die Verknüpfungseinheit VK angepasst werden. Eine Information über die aktuelle Konfiguration des Kommunikationsnetzes wird für die Funktionseinheit zur Netzinformation KI von der zentralen Kontrolleinheit KE bezogen.

Im Kommunikationsnetz werden von einem Netzknoten D1 beispielhafte Daten P (z.B. die Konfigurationsinformation eines neu hinzugefügten Netzknotens D1 im Identifikationsschritt 103) beispielsweise in Form eines Datenpakets ausgesendet. Dabei sind die Daten P mit der eindeutigen Identifikation des Netzknotens D1 versehen - z.B. in Form einer so genannten Link-Layer-Adresse oder einer eindeutigen Signatur. Von diesen Daten P, welche von einem weiterleitenden Netzknoten R1, R2 im Weiterleitungsschritt 104 an die zentrale Kontrolleinheit KE weitergeleitet wurden, wird dann im Authentifikationsschritt 105 eine Funktionseinheit V zur Verifikation durchlaufen. Von der Funktionseinheit V zur Verifikation wird geprüft, ob die in den Daten enthaltene eindeutige Identifikation des Netzknotens D1 mit der eindeutigen Identifikation übereinstimmt, welche im Registrierungsschritt 101 in der zentralen Kontrolleinheit KE für den Netzknoten D1 registriert bzw. in der Datenbank DB hinterlegt wurde. Die Funktionseinheit V zur Verifikation kann beispielsweise aus Performancegründen auf eine Prüfung von ausgesendeten Konfigurationsinformationen der Netzknoten D1, D2, D3, R1, R2 beschränkt werden.

Beinhalten die Daten P eine korrekte Identifikation - d.h. die Identifikation der Daten ist für den aussendenden Netzknoten D1 z.B. in der Datenbank DB der zentralen Kontrolleinheit KE hinterlegt, so werden die Daten P an die Funktionseinheit K zur Konfiguration weitergeleitet. Weisen die Daten P keine korrekte Identifikation auf, so werden die Daten verworfen. Ist das Kommunikationsnetz für den Netzknoten D1, welcher die Daten P ausgesendet hat, noch nicht konfiguriert bzw. ist der aussendende Netzknoten D1 neu zum Kommunikationsnetz hinzugefügt worden, so wird von der Funktionseinheit K zur Konfiguration eine Umkonfiguration des Kommunikationsnetzes angestoßen. Dabei werden Verknüpfungsschritt 106 und Konfigurationsschritt 107 des erfindungsgemäßen Verfahrens durchlaufen.

D.h. von der Funktionseinheit K zur Konfiguration werden aus der zumindest einen Funktionsklasse, welche in der zentralen Kontrolleinheit KE bzw. der zugehörigen Datenbank DB für die eindeutige Identifikation des aussendenden Netzknoten D1 hinterlegt ist, entsprechende Konfigurations- und Kommunikationsdaten abgeleitet. Diese Konfigurations- und Kommunikationsdaten werden dann gemeinsam mit Informationen über bereits integrierte Knoten D2, D3, R1, R2 in eine neue, entsprechende Kommunikationsstruktur bzw. Netzkonfiguration geführt. Die Informationen über bereits integrierte Knoten D2, D3, R1, R2 kann z.B. aus der Funktionseinheit zur Netzinformation KI bezogen werden. Die neu generierte Kommunikationsstruktur bzw. Netzkonfiguration für das Kommunikationsnetz kann dann für den Konfigurationsschritt 107 beispielswiese direkt an die zentrale Kontrolleinheit KE oder die Verknüpfungseinheit VK gesendet werden. Von der Verknüpfungseinheit VK können beispielsweise die Anforderungen der Konfigurations- und Kommunikationsdaten für den neu hinzugefügten Netzknoten D1 in eine Konfiguration für die zentrale Kontrolleinheit KE umgewandelt werden.

Nach erfolgter Konfiguration kann eine Funktionseinheit FW zur Datenweiterleitung ausgeführt werden, durch welche die ausgesendeten Daten P an den Zielknoten entsprechend der jeweiligen Funktionalitäten des Netzknotens D1 weitergeleitet werden. Von der Funktionseinheit FW zur Datenweiterleitung wird anhand der von der Funktionseinheit zur Netzinformation KI zur Verfügung gestellten topologischen Information entschieden, an welchen (Ziel-)Knoten die Daten P weiterzuleiten sind.

Bei Daten P, welche von im Kommunikationsnetz bereits bekannten Netzknoten D2, D3 ausgesendet wurden, wird die Funktionseinheit K zur Konfiguration übersprungen und direkt die Funktionseinheit FW zur Datenweiterleitung durchlaufen, um die ausgesendeten Daten P an den entsprechenden Zielknoten zu übertragen.

## Patentansprüche

1. Verfahren zum Konfigurieren eines Kommunikationsnetzes aufweisend eine Mehrzahl an Netzknoten (R1, R2, D2, D3) sowie zumindest eine zentrale Kontrolleinheit (KE), wobei vom Kommunikationsnetz eine Kommunikationsstruktur, umfassend physikalische oder virtuelle Netzknoten und Verbindungen, zur Verfügung gestellt wird, über welche von den Netzknoten (R1, R1, D2, D3) entsprechend der jeweiligen Funktionalitäten und der jeweils genutzten Dienste (S11, S12, S21, S22) kommuniziert wird, mit folgenden Schritten:
- Registrierung eines weiteren Netzknotens (D1) mit einer eindeutigen Identifikation bei der zentralen Kontrolleinheit (KE), wobei der eindeutigen Identifikation des weiteren Netzknotens (D1) zumindest eine Funktionsklasse von der zumindest einen zentralen Kontrolleinheit (KE) zugeordnet wird (101), und die Funktionsklasse eine dienstspezifische Funktionalität des jeweiligen Netzknoten festlegt und Schnittstellen zur Kommunikationsstruktur umfasst, welche von der Funktionalität des jeweiligen Netzknoten bereitgestellt und/oder benötigt wird, und die dienstspezifische Funktionalität entsprechende Daten und Informationen zum Austausch zwischen Netzknoten umfasst;
- Hinzufügen des weiteren Netzknotens (D1) im Kommunikationsnetz (102);
- Aussenden einer Konfigurationsinformation durch den hinzugefügten Netzknoten (D1), von welcher zumindest die eindeutige Identifikation des Netzknotens (D1) umfasst wird (103);
- Weiterleiten der Konfigurationsinformation an die zentrale Kontrolleinheit (KE) (104);
- Authentifikation des hinzugefügten Netzknotens (D1) anhand der eindeutigen Identifikation in der Konfigurationsinformation durch die zentrale Kontrolleinheit (KE) (105);
- Ableiten von Konfigurations- und Kommunikationsdaten für den hinzugefügten Netzknoten (D1) auf Basis der zumindest einen Funktionsklasse, welche der eindeutigen Identifikation des hinzugefügten Netzknotens (D1) zugeordnet worden ist (106);
- Umkonfigurieren der Kommunikationsstruktur anhand der Konfigurations- und Kommunikationsdaten für den hinzugefügten Netzknoten (D1).

2. Verfahren nach Anspruch 1, ***dadurch gekennzeichnet, dass*** von der zumindest einen Funktionsklasse eine dienstspezifische Funktionalität des jeweiligen Netzknoten (D1) festgelegt wird, und dass von der zumindest einen Funktionsklasse Schnittstellen zur Kommunikationsstruktur umfasst werden (101), welche von der Funktionalität des jeweiligen Netzknotens (D1) bereitgestellt und/oder benötigt werden.

3. Verfahren nach einem der Ansprüche 1 bis 2, ***dadurch gekennzeichnet, dass*** die eindeutige Identifikation für den jeweiligen Netzknoten (D1) von der zentralen Kontrolleinheit (KE) vorgegeben wird (101).

4. Verfahren nach einem der Ansprüche 1 bis 2, ***dadurch gekennzeichnet, dass*** die eindeutige Identifikation für den jeweiligen Netzknoten (D1) vom jeweiligen Netzknoten (D1) bei der Registrierung zur Verfügung gestellt wird (101).

5. Verfahren nach einem der vorangegangenen Ansprüche, ***dadurch gekennzeichnet, dass*** eine Zuordnung der zumindest eine Funktionsklasse zur eindeutigen Identifikation des jeweiligen Netzknotens (D1) automatisiert durchgeführt wird (101).

6. Verfahren nach einem der vorangegangenen Ansprüche,
***dadurch gekennzeichnet, dass*** von der zentralen Kontrolleinheit (KE) eine Verknüpfungseinheit (VK) umfasst wird, durch welche die zumindest eine Funktionsklasse des jeweiligen Netzknotens (D1) sowie die eindeutige Identifikation des jeweiligen Netzknotens (D1) mit der Kommunikationsstruktur des Kommunikationsnetzes verknüpft wird (106) .

7. Verfahren nach einem der vorangegangenen Ansprüche,
***dadurch gekennzeichnet, dass*** der zentralen Kontrolleinheit (KE) eine Datenbankeinheit (DB) zugeordnet wird.

8. Verfahren nach Verfahren nach einem der vorangegangenen Ansprüche, ***dadurch gekennzeichnet, dass*** für die Konfigurationsinformation des jeweiligen Netzknotens (D1) Nachrichten mit einem so genannten Authentication Header verwendet werden.

9. Verfahren nach einem der vorangegangenen Ansprüche,
***dadurch gekennzeichnet, dass*** für die Konfigurationsinformation des jeweiligen Netzknotens (D1) eine Nachricht nach dem sogenannten Neighbor Discovery Protocol oder NDP verwendet wird.

10. Verfahren nach einem der vorangegangenen Ansprüche,
***dadurch gekennzeichnet, dass*** im Kommunikationsnetz das sogenannte Software-Defined Networking-Konzept eingesetzt wird.

## Claims

1. Method for configuring a communication network containing a plurality of network nodes (R1, R2, D2, D3) and at least one central control unit (KE), wherein a communication structure, comprising physical or virtual network nodes and connections, is made available by the communication network and is used by the network nodes (R1, R2, D2, D3) to communicate in accordance with the respective functionalities and the respectively used services (S11, S12, S21, S22), having the following steps:
- registering a further network node (D1) having a unique identification with the central control unit (KE), wherein the unique identification of the further network node (D1) is assigned at least one function class by the at least one central control unit (KE) (101), and the function class defines a service-specific functionality of the respective network node and comprises interfaces to the communication structure provided and/or required by the functionality of the respective network node, and the service-specific functionality comprises corresponding data and information about the exchange between network nodes;
- adding the further network node (D1) to the communication network (102);
- sending configuration information by way of the added network node (D1), comprising at least the unique identification of the network node (D1) (103);
- forwarding the configuration information to the central control unit (KE) (104);
- authenticating the added network node (D1) based on the unique identification in the configuration information by way of the central control unit (KE) (105);
- deriving configuration and communication data for the added network node (D1) on the basis of the at least one function class that has been assigned to the unique identification of the added network node (D1) (106);
- reconfiguring the communication structure based on the configuration and communication data for the added network node (D1).

2. Method according to Claim 1, **characterized in that** a service-specific functionality of the respective network node (D1) is defined by the at least one function class, and that the at least one function class comprises interfaces to the communication structure (101) provided and/or required by the functionality of the respective network node (D1).

3. Method according to either of Claims 1 and 2, **characterized in that** the unique identification for the respective network node (D1) is prescribed (101) by the central control unit (KE).

4. Method according to either of Claims 1 and 2, **characterized in that** the unique identification for the respective network node (D1) is made available (101) by the respective network node (D1) during registration.

5. Method according to one of the preceding claims, **characterized in that** assignment of the at least one function class to the unique identification of the respective network node (D1) is performed automatically (101).

6. Method according to one of the preceding claims, **characterized in that** the central control unit (KE) comprises a linking unit (VK) by way of which the at least one function class of the respective network node (D1) and the unique identification of the respective network node (D1) is linked to the communication structure of the communication network (106) .

7. Method according to one of the preceding claims, **characterized in that** the central control unit (KE) is assigned a database unit (DB).

8. Method according to one of the preceding claims, **characterized in that** messages containing a so-called authentication header are used for the configuration information of the respective network node (D1).

9. Method according to one of the preceding claims, **characterized in that** a message in accordance with the so-called Neighbour Discovery Protocol or NDP is used for the configuration information of the respective network node (D1).

10. Method according to one of the preceding claims, **characterized in that** the so-called software-defined networking concept is used in the communication network.

## Revendications

1. Procédé de configuration d'un réseau de communication comprenant une pluralité de noeuds de réseau (R1, R2, D2, D3) ainsi qu'au moins une unité de contrôle centrale (KE), dans lequel une structure de communication, comprenant des noeuds de réseau et liaisons physiques ou virtuels sont mis à disposition par le réseau de communication, par l'intermédiaire de laquelle les noeuds de réseau (R1, R2, D2, D3) communiquent en fonction des fonctionnalités correspondantes et des services (511, S12, S21, S22) utilisés respectivement, avec les étapes suivantes :
- enregistrement d'un noeud de réseau supplémentaire (D1) avec une identification unique dans l'unité de contrôle centrale (KE), dans lequel, à l'identification unique du noeud de réseau supplémentaire (D1), est attribuée (101), par l'au moins une unité de contrôle centrale (KE), au moins une classe de fonction, et la classe de fonction définit une fonctionnalité spécifique au service du noeud de réseau correspondant et comprend des interfaces avec la structure de communication qui sont mises à disposition et/ou requises par la fonctionnalité du noeud de réseau correspondant et la fonctionnalité spécifique au service comprend des données et informations correspondantes à échanger entre les noeuds de réseau ;
- ajout du noeud de réseau supplémentaire (D1) au réseau de communication (102) ;
- envoi d'une information de configuration par le noeud de réseau ajouté (D1), qui comprend (103) au moins l'identification unique du noeud de réseau (D1);
- transmission (104) de l'information de configuration à l'unité de contrôle centrale (KE);
- authentification (105) du noeud de réseau ajouté (D1) à l'aide de l'identification unique dans l'information de configuration par l'unité de contrôle centrale (KE);
- déduction (106) des données de configuration et de communication pour le noeud de réseau ajouté (D1) sur la base de l'au moins une classe de fonction qui est attribuée à l'identification unique du noeud de réseau ajouté (D1);
- reconfiguration de la structure de communication à l'aide des données de configuration et de communication pour le noeud de réseau ajouté (D1).

2. Procédé selon la revendication 1, **caractérisé en ce que** l'au moins une classe de fonction définit une fonctionnalité spécifique au service du noeud de réseau (D1) correspondant et **en ce que** l'au moins une classe de fonction comprend (101)des interfaces avec la structure de communication, qui sont mises à disposition et/ou requises par la fonctionnalité du noeud de réseau (D1) correspondant.

3. Procédé selon l'une des revendications 1 à 2, **caractérisé en ce que** l'identification unique pour le noeud de réseau (D1) correspondant est prédéterminé (101) par l'unité de contrôle centrale (KE).

4. Procédé selon l'une des revendications 1 à 2, **caractérisé en ce que** l'identification unique pour le noeud de réseau (D1) correspondant est mise à disposition (101) par le noeud de réseau (D1) correspondant lors de l'enregistrement.

5. Procédé selon l'une des revendications précédentes, **caractérisé en ce qu'**une attribution de l'au moins une classe de fonction à l'identification unique du noeud de réseau (D1) correspondant est effectuée automatiquement (101).

6. Procédé selon l'une des revendications précédentes, **caractérisé en ce que** l'unité de contrôle centrale (KE) comprend une unité d'interconnexion (VK) grâce à laquelle l'au moins une classe de fonction du noeud de réseau (D1) correspondant ainsi que l'identification unique du noeud de réseau (D1) correspondant est interconnectée (106) avec la structure de communication du réseau de communication.

7. Procédé selon l'une des revendications précédentes, **caractérisé en ce que**, à l'unité de contrôle centrale (KE) est attribuée une unité de base de données (DB).

8. Procédé selon l'une des revendications précédentes, **caractérisé en ce que**, pour l'information de configuration du noeud de réseau (D1) correspondant, on utilise des messages avec ce qu'on appelle un Authentification Header.

9. Procédé selon l'une des revendications précédentes, **caractérisé en ce que**, pour l'information de configuration du noeud de réseau (D1) correspondant, on utilise un message selon ce qu'on appelle le Neighbor Discovery Protocol ou NDP.

10. Procédé selon l'une des revendications précédentes, **caractérisé en ce que**, dans le réseau de communication, on utilise ce qu'on appelle le concept de Sotware-Defined Networking.
